# EUROPEAN PATENT APPLICATION

(11) **EP 2 860 115 A1**
(43) Date of publication of application: **15.04.2015**
(21) Application number: 13188395.1
(22) Date of filing: 11.10.2013
(51) Int. Cl.: B64G 1/10, B64G 1/64

(54) **Method for modifying a position of uncontrolled objects in space and spacecraft for realizing the method**

(71) Applicant: Thales Alenia Space Deutschland GmbH, 71254 Ditzingen (DE)
(72) Inventor: Dr. Griebel, Hannes S., Cambridge, CB3 0GU (GB)
(74) Representative: DREISS Patentanwälte PartG mbB

(57) **Abstract**

The invention refers to a method for modifying a position of uncontrolled objects (60) in space. In order to provide a method for removing debris objects (60) cheaply and efficiently from space a method is suggested characterized by the steps of:
- moving a plurality of individually controllable spacecraft (1) near an object (60) to be moved,
- attaching the spacecraft (1) to the object (60) from different sides, the object (60) and the spacecraft (1) attached thereto thereby forming a single rigidly coupled entity (1, 60),
- controlling the position of the entity by controlling the entity's individual spacecraft (1), and
- moving the entity (1, 60) to a desired position in space by controlling its position.

## Description

The present invention refers to a method for modifying a position or orbit of uncontrolled objects in space. The invention also refers to a spacecraft comprising means for realizing the method according to the present invention.

Such uncontrolled objects intended to be removed from their current orbit are also referred to as orbital debris, space debris, space junk or orbital junk. These comprise all man-made objects presently in orbit around Earth, which serve no useful purpose. They can range in size from millimetres (such as paint chips or Multi Layer Insulation (MLI) fragments from satellites or other spacecraft) to several metres (such as defunct satellites or spent rocket stages). As the number of debris objects increases beyond a certain threshold in an orbital region, a debris object count will continue to increase even if no more launches were to occur. In what is known as the "Kessler Syndrome", objects can collide with other objects, causing a run-away fragmentation process.

Removing objects cheaply and efficiently is therefore paramount for sustaining space flight in the future, yet up to now there are no systems known which could meet these demands. Two recent projects dealing with the removal of space debris have been recently published. One is the German DEOS on-orbit servicing mission, which is presently in its implementation stage (see Wolf, T.: Deutsche Orbitale Service Mission DEOS, ASTRA 2013, Noordwijk: European Space Agency). The other is ESA's e.Deorbit concurrent design facility (CDF) study (see Biesbroek, R.: The e.Deorbit CDF Study - A design study for the safe removal of a large space debris, 6th IAASS Conference, Montreal, Canada: IAASS, 2013).

The key difference between both approaches is that DEOS attempts to demonstrate key technologies using a known target launched as part of the demonstrator package, while e.Deorbit is a CDF study with the goal to identify trade-offs in an ESA-stipulated mission architecture. An ITT (Invitation To Tender) analysis has recently been issued for an e.Deorbit industrial feasibility study. The key commonality of both missions is the focus on 8t SSO (Semi Synchronous Orbit) type orbital debris (i.e. ENVISAT), and their reliance on robotic arms to capture the target. ESA's e.Deorbit concept also explores the use of tentacles, nets and harpoons, but both concepts rely on a single vehicle designed to capture the target by means of physical interaction.

It is an object of the present invention to provide a method for removing debris objects cheaply and efficiently from space.

As a solution to this object a method for modifying a position or orbit of uncontrolled objects in space is suggested, which is characterized by the following steps:
- moving a plurality of individually controllable spacecraft near an object to be moved,
- attaching the spacecraft to the object from different sides, the object and the spacecraft attached thereto thereby forming a single rigidly coupled entity,
- controlling the position or orbit of the entity by controlling the entity's individual spacecraft, and
- moving the entity to a desired position or orbit in space by controlling its position or orbit.

The key differences between the above-identified known concepts (DEOS and e.Deorbit) and the present invention result from the fractionated spacecraft approach. The approach according to the invention uses the physical interaction of the spacecraft with the target object (e.g. by means of a robotic arm, a harpoon or a clamp) and the attachment of the spacecraft to the object not for the purpose of capturing the object, but to attach the spacecraft to the object in order to form a single rigid entity. The plurality of spacecraft attached to the object with their individual drive propulsion systems subsequently act as a cluster of thruster pods that can be commanded as if they were a single spacecraft. The absence of complex control requirements resulting from flexible tethers and nets attached to a tumbling target many times heavier than the active space debris removal (ADR) hardware (i.e. the spacecraft) make the concept according to the present invention much safer. Eliminating tethers and nets also eliminates the failure modes associated with their complex deployment mechanisms. The multitude of spacecraft in the method according to the present invention also increases redundancy options, should one of them fail.

In contrast to the known e.Deorbit and DEOS scenarios, the method according to the present invention is scalable with little to no modification to hardware and even software. Larger objects may be captured using identical spacecraft, only more of them. A large number of spacecraft (say 16 or 32 or in some cases for larger asteroids even thousands) may be used to relocate an asteroid found on a collision course with Earth. Another key difference is therefore the possibility of mass-producing the spacecraft used for the method according to the present invention.

In terms of on-orbit wet mass required to put the ADR solution to work, the method according to the present invention will probably require more. This is due to the fact that mass-produced spacecraft can only be launched in increments of one, the only variation possible being the amount of fuel which is put on board, whereas a custom mission can be weight-optimised. However, with ESA's VEGA launch costing roughly 30 Million EUR and the Indian PSLV (Polar Satellite Launch Vehicle) even less, it is expected that the cost savings from mass production of the spacecraft outweigh the higher launch mass and the resulting higher expenses for launching of the spacecraft many times. It is important therefore to achieve a competitive advantage through mass production of the spacecraft, to justify launching the higher mass.

The present invention proposes a method for conducting a space mission for active space debris removal. The major elements of this invention are small, standardized satellites, which can be cheaply mass produced, and standard launch vehicle adapters for all suitable space launch vehicles, such as ESA's VEGA or India's PSLV. The mission architecture preferably employs several of the relatively small spacecraft to remove a single, larger object for disposal in the atmosphere of Earth or relocation to a different (so-called graveyard) orbit. The individual spacecraft employ orbital computers for target information processing, sensor data fusion and mission control and re-configuration, as well as inter-satellite data links to share data among the spacecraft and to act cooperatively in the removal of the target object.

With an identified need to remove five major objects from orbit each year to prevent a run-away orbital debris count, a standard mission with cheaply produced space vehicles would both represent a reasonable business case, as well as make active debris removal (ADR) affordable for customers. Since the removal of five major objects is a minimum requirement just to maintain the present rate of new space launches, a permanent market volume of five such missions per year may be expected at the very least.

In addition to man-made junk, natural objects, such as asteroids found on a collision course with Earth, could also be relocated using the mission scenario according to the present invention in interplanetary space.

The mission concept according to the method of the present invention employs a 3-dimensional strategy for attaching the multitude of spacecraft to the target object. In a possible scenario, four spacecraft, collectively referred to as "pack", go after the target object by forming a tetrahedron, preferably an equilateral tetrahedron. The four spacecraft, exchanging information using an inter-satellite protocol for proximity operations, autonomously determine their own attitude, the attitude of the tetrahedron attack (or scanning or monitoring) formation, their own individual orbits and the tetrahedron orbit. Hence, the tetrahedron is the preferred configuration for scanning or observing the object. The tetrahedron attack formation is maintained using the ranging capability of the protocol. As a result of the scanning or observation the spacecraft calculate their preferred attachment-points on different sides of the object. The position of the attachment-points can depend on the object's form and dimension and in particular on its surface appearance and condition. From the objective attachment-points the spacecraft or their computers, respectively, calculate their target approach manoeuvres.

For decision making purposes, the computer of at least one of the spacecraft may assume the role of a master-computer and the computers of the other spacecraft are slave-computers. While the computers on all spacecraft to be attached to the object share the same information, it is the master-computer that provides the attack manoeuvre vectors, go-ahead decisions and tetrahedron navigation. The pack may also reconfigure in flight, should the Master computer detect a fault or be at a significant disagreement with the other three (mission inherent redundancy concept).

Once the target object is acquired and positively identified, the four spacecraft form their tetrahedron around the target, each spacecraft scanning the target with a remote sensor suite. Each spacecraft or its computer, respectively, builds a 3-dimensional model of the target object as it sees it, forwarding the results to the other three spacecraft, until each spacecraft has a complete 3-dimensional model of the target object. Comparing it to 3-dimensional engineering models of the object which were loaded into the memory of the computers of the spacecraft prior to the mission, the spacecraft can identify the target, determine possible damage, identify structural weak points, calculate target orbital parameters and roll rates and from all that determine optimal attachment points or "landing spots" for a safe de-orbit or re-orbit.

Once the go-ahead decision for object removal has been made, preferably by a human being and not automatically, the spacecraft uses physical interaction of the spacecraft with the target object (e.g. by means of a robotic arm, a harpoon or a clamp) in order to attach the spacecraft to the object's skin and to establish a rigid entity comprising the object as well as the spacecraft attached thereto. For example, each spacecraft can fire a harpoon at the designated "landing" spot on the target object. One at a time or contemporaneously, the satellites attach themselves firmly to the object by reeling in the harpoon cable. Once a spacecraft sits firmly on the outside surface of the object (the object's skin), with the cable pulled taut, additionally at least one, preferably four anchor clamps can be shot into the target object, to provide sufficient force translation for later thruster firing.

It should be noted at this point that de-spinning or de-tumbling of the target will not be necessary. Nor will it be necessary to ensure thrusters are aligned with the target's centre of gravity. By tracking their individual attitude and knowing their location on the target object, the spacecraft in the pack can cooperatively determine an optimal manoeuvre and then pulse fire whichever thruster happens to point in the right direction. A damping law may also be specified to prevent a runaway object spin-up. For example, another spacecraft in the pack may simultaneously pulse one of its own thrusters to offset any moment created by the actual manoeuvre pulse. Likewise, those thrusters may be pulsed first which counteract or at least aggravate the prevailing spin. Since each thruster firing will inevitably have some effect on the object's rotation, the pack should permanently monitor and update its attitude quaternions in real time. The mission ends once the target has reached its desired position or destination (orbit).

If the destination of the entity comprising the target object and the multitude of spacecraft is atmospheric re-entry, remaining fuel and oxidizer of at least some of the spacecraft may be mixed and ignited, to selectively explode the object in an attempt to prevent larger chunks of debris from reaching the Earth surface. In an atmospheric entry scenario, the computer of at least one of the spacecraft, together with its main memory and mass storage, may further be detached from the rest of the spacecraft, packed in an entry capsule and sent back to Earth, therefore surviving object disintegration and thus allowing recovery of part of the spacecraft. Alternatively, at least one of the spacecraft in its entirety may be detached from the object, packed in an entry capsule and sent back to Earth, therefore surviving object disintegration and thus allowing recovery of the entire spacecraft. Extensive post-flight evaluation of the spacecraft and their memories will help better understand mission performance and future improvement possibilities. Since all spacecraft and their computers, respectively, in each pack preferably share the same information, it can be sufficient to recover one spacecraft computer for post-flight evaluation. Of course, it is also possible that the entire entity comprising all spacecraft attached to the object burn up upon re-entry into the Earth's atmosphere.

If the destination of the entity is a graveyard orbit, at least one of the spacecraft may continue to be attached to the object, thereby providing a beacon signal and/or ranging transponder signals for tracking purposes, if so desired.

According to a preferred embodiment of the present invention the formation of the spacecraft, in which they approach the target object and are attached to the object, is a tetrahedron with at least one spacecraft at each vertex. This is advantageous because it allows the spacecraft to establish a 3-dimensional sensor network around the object, and later attach themselves at optimal "landing areas" to create "thruster quadrants" on the target object. The desired formation is easily achieved. Because it is a 3-dimensional geometry, the spacecraft will each have different altitudes and different vector angles with respect to each other and the ecliptic. To ensure the tetrahedron stays together, each spacecraft is sent off on its own orbit, with a slightly different inclination and perigee argument each, but with identical numerical eccentricities and orbital periods. The basic tetrahedron is thus created.

Perturbing forces can be actively compensated by the at least four spacecraft, which can determine their base separation through radio ranging inherent in the protocol used in the radio communication link between the spacecraft of a pack. Firing micro-thrusters will help them maintain base separation and keep the resulting orbit of the tetrahedron intact. Because altitudes are fluctuating around the median altitude of the eccentric orbits and the different inclinations will lead to relative "north-south-swaps" along one orbit, the tetrahedron will appear to be rotating in a "halo" orbit around its centre as the pack progresses on its orbit.

With the target object in the centre of the tetrahedron, the spacecraft can then give the object a full, 3-dimensional scan to assess its structural integrity and to determine the best possible approach and de-orbit strategy. As any uncooperative target is expected to rotate around at least one, if not several, of its axes, the target will automatically contribute to the scanning process.

In the following a preferred embodiment of the spacecraft used for realizing the method according to the present invention, are described in detail. In order to be as versatile as possible, the spacecraft preferably are capable of sustained operation in any attitude with respect to the sun. Cameras, star trackers and other sensitive sensors are therefore preferably provided with long baffles and shutters. The entire surface of the spacecraft can be covered in solar arrays and thermal radiators.

The spacecraft itself can be a 3-axis stabilized satellite with a hexagonal base structure spanning approximately 1.5m base to base, and a maximum mass of 400kg wet mass (with fuel). Each side may have an equipment bay referred to as "outer bay".

Propellant can be stored in a plurality of separate tanks located in separate propellant bays inward of the outer equipment bays. An overall number of, e.g. three miniaturized star trackers, like the kind available for CubeSat use, are located two in outer bays 120° apart and one on top. This ensures at least one star tracker always sees the sky. Furthermore, a number of satellite receivers, e.g. three hybrid GPS/Galileo receivers, paired with three separate antennas, are installed in a similar fashion. Four reaction wheels and two INS (Inertial Navigation System) platforms are also provided.

The structure may further consist of a hexagonal outer ring with the aforementioned equipment bays behind each side panel, a propellant bay with tanks and a hexagonal inner ring. Inside the inner ring sit the harpoon and reel system on one side and one of the multitude of engines, for example in the form of pulsed thrusters, on the other side.

The spacecraft may comprise five sensor groups, three of which are located in the side panels and one each in the top and bottom panel. Preferably, there are also five thrusters, allowing the spacecraft to act as a thruster pod when clamped to the target object (discussed in further detail later on).

Furthermore, three impact dampers which also act as spacers and attachment points with three release bolts may protrude from the bottom panel to interface with other spacecraft and dampen the impact on the target object. A central hexagonal skirt which doubles as a heat shield for the centre engine provides a launcher and spacecraft thrust structure interface for the purpose of building a launch stack that enables the pack to be launched on a single rocket.

Further features and advantages of the present invention are shown in the figures and described hereinafter with reference to the figures. These show:
- Fig. 1: a preferred embodiment of a spacecraft adapted for use within the method according to the present invention in a side view;
- Fig. 2a: a preferred embodiment of a spacecraft adapted for use within the method according to the present invention in a top sectional view;
- Fig. 2b: the spacecraft of Fig. 2a in a side sectional view;
- Fig. 3: an exemplary number of spacecraft adapted for use within the method according to the present invention in a launch configuration;
- Fig. 4: a block diagram of a preferred embodiment of a spacecraft adapted for use within the method according to the present invention;
- Fig. 5: a preferred embodiment of a spacecraft adapted for use within the method according to the present invention in the process of attachment to a target object; and
- Fig. 6: a pack of spacecraft attached to a target object.

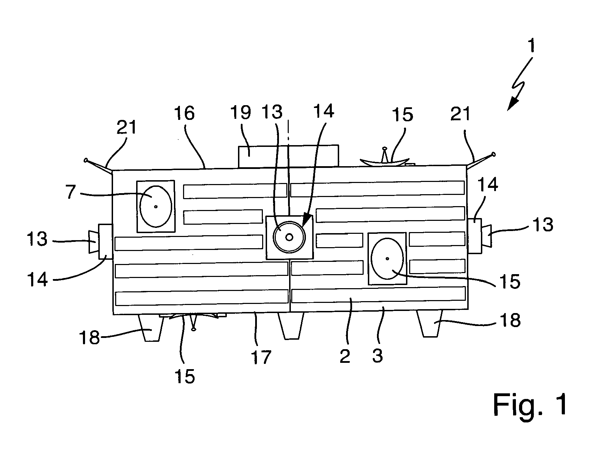

Figure 1 shows a preferred embodiment of a spacecraft according to the present invention. The spacecraft is designated in its entirety with reference sign 1. In order to be as versatile as possible, the spacecraft 1 is capable of sustained operation in any attitude with respect to the sun. Cameras, star trackers and other sensitive sensors are therefore provided with long baffles and shutters. The entire surface of the spacecraft 1 is covered in solar cell arrays 2 and thermal radiators 3. Of course, it is also possible that only part of the spacecraft's surface is covered with solar cells 2 and/or thermal radiators 3.

Further, the spacecraft 1 could also be equipped with a rechargeable battery instead of the solar cells 2 and/or in addition to the solar cells 2. If the battery was provided additionally to the solar cells 2, these could charge the battery with the electricity created from the sunlight.

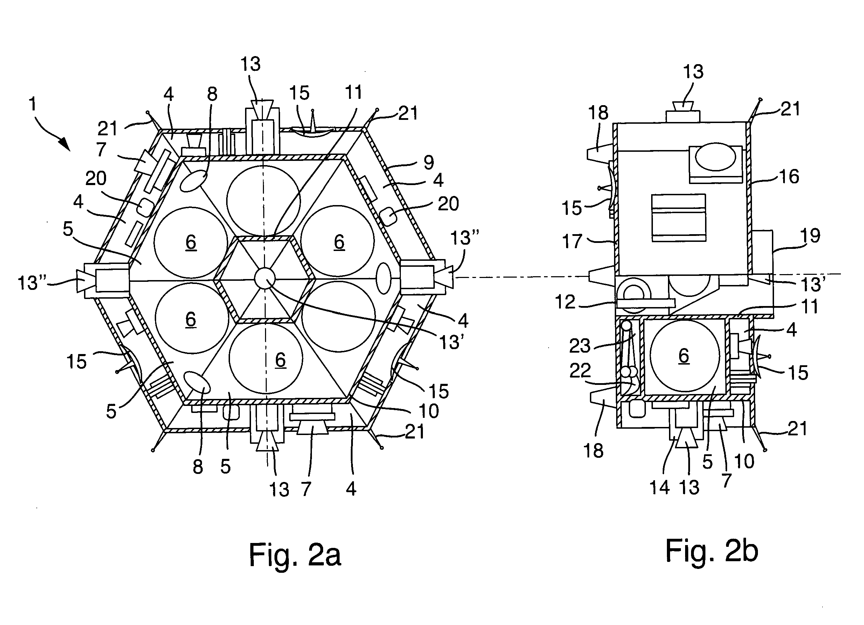

The spacecraft 1 itself may be embodied as a 3-axis stabilized satellite. The spacecraft 1 may, for example, have a hexagonal base structure spanning 1.5m base to base, a dry mass of 100kg (without propellant) and a wet mass of 400kg (including propellant). The hexagonal base structure can be seen from figure 2. Of course, the spacecraft 1 may have any other type of base structure, any size differing from the 1.5m indicated above and any weight differing from the 100kg/ 400kg indicated above.

According to the embodiment shown in figures 2a and 2b, each side of the spacecraft 1 has an equipment bay 4, also referred to as outer bay. Of course, differently it would also be possible that the equipment bays 4 are only located on some of the sides of the spacecraft 1. Inward from the outer equipment bays 4, there are intermediate equipment bays 5 for receiving one or more tanks 6 for propellant or fuel for the spacecraft's engines, batteries, plumbing etc. In the embodiment of figure 2 the propellant is stored in six separate tanks 6 located in six separate intermediate propellant bays 5. Of course, there may also be only one intermediate equipment bay 5, in which case the tanks 6 would be all located in the same propellant bay 5. Of course, there may also be just one tank 6, or more than six tanks 6.

A total of three miniaturized star trackers 7, e.g. the kind meanwhile available for CubeSat use, are located two in outer bays 4, 120° apart from one another, and one on top of the spacecraft 1. This ensures that at least one star tracker 7 always sees the sky (a scenario where appendages protruding from the target object block one star tracker 7, while the Earth and the Sun each block the other two, is rather unlikely). Of course, the star trackers 7 can be located at different positions in the spacecraft 1. Further there may be more or less than the three star trackers 7 provided in the spacecraft 1 according to the invention. Finally, it is even possible that there are no space trackers 7 at all in the spacecraft 1.

Further, the spacecraft 1 comprises at least one satellite receiver. In the embodiment of figure 2 there are three hybrid GPS/Galileo receivers, paired with three separate antennas, are installed in a similar fashion. The satellite receivers make part of the equipment located in at least some of the outer bays 4. The equipment is generally designate with reference sign 20.

Four reaction wheels 8 and two INS (Inertial Navigation System) platforms are also provided. The spacecraft structure consists of a hexagonal outer ring 10 with the aforementioned equipment bays 4 behind each side panel 9, propellant bays 5 with tanks 6 and a hexagonal inner ring 11. The side panels 9 may be made of a honeycomb structure, preferably made of aluminium, titanium and/or a plastics material. The form of the outer and inner rings 10, 11 does not necessarily have to be hexagonal. They may have any other desired form, for example a circular form, a rectangular or a square form. Inside the inner ring 11 sit the harpoon and reel system 12 on one side and one of the five engines (e.g. pulsed thrusters) 13 on the other side. Of course, the harpoon system 12 can be located at any other desired and suitable location of the spacecraft 1, too. Furthermore, the number of engines 13 available in the spacecraft 1 can vary from the five of the spacecraft 1 according to the embodiment of figures 1 and 2. Finally, the type of engine can also vary from the pulsed thrusters 13 shown in figure 2. The engines 13 are surrounded by a heat shield 14.

The spacecraft 1 comprises at least one claw fastener 22 embodied as a robotic claw, located in a separate compartment 23 below the propellant bay 5. Of course, the claw fastener 22 can be embodied in any different way, too. Further, the claw fastener 22 can be located at any suitable position in the spacecraft 1, too. Finally, more than one claw fastener 22 can be provided in order to assure a safe and reliable rigid connection between the target object and the spacecraft 1. The claw 22 may be extracted from the compartment 23 towards the surface of an object and then coupled to the object's surface by closing or moving the claw in order to hook the claw 22 into the object's surface.

The spacecraft 1 has five sensor groups 15 (or sensor suite or sensor package), three of which are located in outer bays 4 within the side panels 9 and one each in the top panel 16 and the bottom panel 17. The sensor groups 15 can comprise any type of sensor suitable for making the spacecraft 1 explore its surroundings, determine, capture and analyse the surface of an object to which the spacecraft 1 is to be attached and determine and control its movement in space. The five thrusters 13 allow the spacecraft 1 to act as a thruster pod when clamped to the target object (discussed in further detail later on).

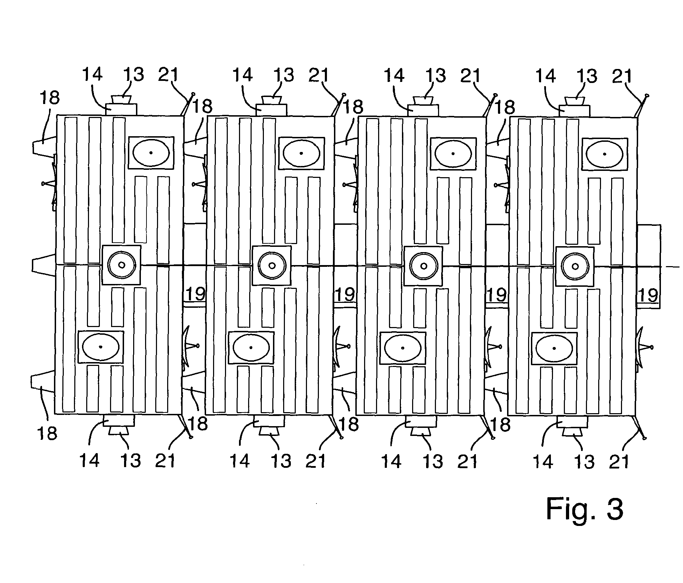

Furthermore, three impact dampers 18 are provided on the bottom panel 17. The dampers 18 also act as spacers and attachment points with three release bolts protrude from the bottom panel 17 to interface with other spacecraft 1 and dampen the impact on the target object. A central hexagonal skirt 19 which doubles as a heat shield for the centre engine 13' provides a launcher or launch adapter and spacecraft thrust structure interface for the purpose of building a launch stack that enables the pack (plurality of spacecraft 1) to be launched on a single rocket (see the four stacked spacecraft 1 in a launch configuration in figure 3). Finally, the spacecraft 1 is provided with at least one radio antenna 21 and a communication device (not shown in figure 2) for realizing a wireless data communication to other spacecraft 1 equally equipped with radio antennae 21.

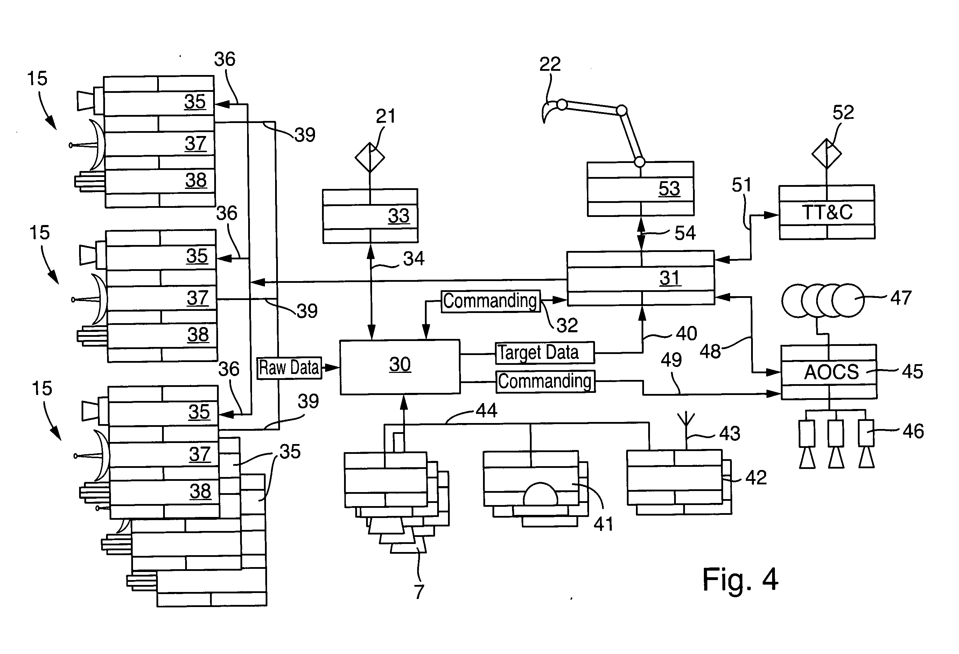

An example of a block diagram of the spacecraft 1 according to a preferred embodiment of the invention is given in Figure 4. It comprises a high-speed computer 30 operatively connected to a flight computer 31. The computer 30 and the flight computer 31 exchange command signals across a data communication line 32. Further, the computer 30 provides target data to the flight computer 31 via data communication link 40. The computer 30 is operatively connected to the communication device 33 via a data communication link 34. The flight computer 31 is connected to imaging sensors 35 and further sensors by means of data communication links 36. The further sensors comprise, for instance, radar sensors 37 and laser rangers 38. The sensors 35, 37, 38 (= sensor group 15) provide raw data to the computer 30 via data communication links 39. A plurality of star trackers 7, a plurality of INS (Inertial Navigation System) platforms 41 and a plurality of navigation satellite receivers 42 comprising satellite antennae 43 provide information to the computer 30 via data communication links 44. Furthermore, the spacecraft 1 comprises an attitude and orbit control system (AOCS) 45 equipped with thrusters 46 (= rocket engines) and attitude actuators 47 (e.g. momentum wheels, control moment gyros or magnetic torquers or any combination of these). The attitude actuators 47 correspond to the entities 8 in Fig. 2b. The AOCS 45 is operatively connected to the flight computer 31 via data communication link 48. Furthermore, the AOCS 45 is operatively connected to the computer 30 via data communication link 49. Further, the spacecraft 1 is provided with a telemetry tracking and control (TT&C) device 50, which is operatively connected to the flight computer 31 via data communication link 51 and comprises an antenna 52. Finally, the flight computer 31 is connected to a control device 53 for the fastener claw 22 via data communication link 54.

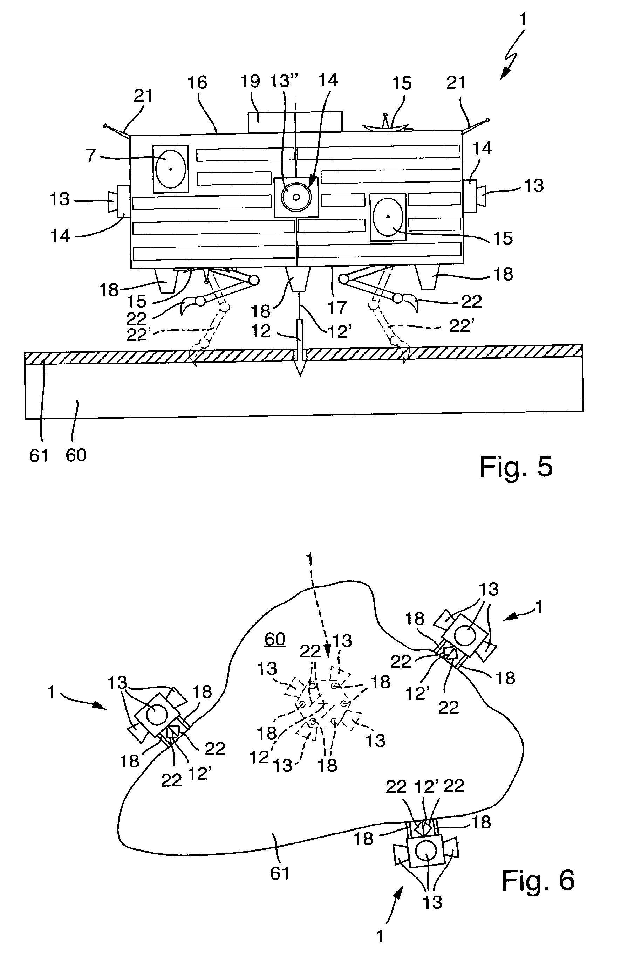

Figure 5 shows the attachment mechanism and method of the spacecraft 1 to an uncontrolled target object 60 to be moved in space.

A first embodiment, hereinafter referred to as the Bi-Propellan option, makes use of a bi-propellant propulsion based on Monomethyl Hydrazine and di-nitrogen-tetroxide (N2O4), feeding five engines 13, for example five bipropellant Astrium 200N thrusters, of which two engines 13 are located in opposite base bays 4, two engines 13" on tips and one engine 13' on the top panel 16 of the spacecraft 1. Opposite the top thruster 13' lies the harpoon-and-reel-system 12. Four anchor clamps 22 are located in the tips of the spacecraft 1 that do not have thrusters 13.

A further embodiment, hereinafter referred to as the Mono-Propellant option, is a simpler design based on a monopropellant system using N2H4. The five thrusters 13 would be 400N Hydrazin models, also offered by Astrium. While having a slightly lower specific impulse, they require less plumbing and come in a 400N variety, making each burn more efficient. They can be operated in a pulsed mode.

Of course, many other embodiments are possible, too. The above mentioned thrusters 13 are chosen because they can be pulsed and have flight heritage on Europe's ATV (200N bipropellant) and Ariane rockets (400N mono-propellant). While 200N may be insufficient for good efficiency on heavy payloads (such as those requiring double-pack attacks on the object 60), it is possible to have two thrusters 13 over eight or more thrusters 13 face in the same direction, and firing them simultaneously in a synchronized pulse sequence. Because impulsive manoeuvres get better with higher instantaneous thrust, the firing sequence can be optimized for either maximum efficiency or maximum versatility. When attached to the target object 60 thereby forming the rigid entity, the total thrust and resulting vector can be modulated across the pack by coordinated pulses of individual thrusters 13.

The entire pack comprising the plurality of spacecraft 1 may either be launched by a single rocket (see the launch configuration of figure 3), or by multiple launches that subsequently inject the spacecraft 1 into the target object 60 rendez-vous orbit. The spacecraft 1 can then separate to assume their attack formation when approaching the target object 60. The initial base separation can be large with respect to the target object 60, in any case large enough to prevent any of the spacecraft 1 trajectories to intersect with the uncertainty ellipse of the target object 60 at any point in time. As the object parameters are established with higher precision, the pack can gradually reduce the tetrahedron base length for a more detailed scan of the target object 60, until the object 60 is within reach of the harpoon 12 and in particular the harpoon cable 12'. Then, the harpoon 12 of each of the satellites 1 is shot at the object 60, where it is ideally attached or coupled to the object's skin 61 at the previously determined attachment-points. Although the preferred attack formation for the pack of spaceships 1 is a tetrahedron, the attachment-points of the harpoons 12 of the various spacecraft 1 do not necessarily have to be located in a tetrahedron on the object's skin 61.

The mission according to the method of the present invention is about removing orbital debris, and as such must take care that no additional debris is left behind. The rocket must therefore launch the pack onto an elliptical orbit with a pericentre altitude below 200km for timely de-orbit of the rocket's booster stage. From this orbit, the pack can raise its individual spacecraft orbits to match their respective tetrahedron position. Because the most pressing debris removal needs concern typical polar and sun synchronous orbits, suitable rockets are, amongst others, India's PSLV (∼1.7t to polar orbit) at approximately 15 million EUR each and ESA's VEGA launcher at approximately 32 million EUR per flight. Both systems would be able to launch one full space attack complement (comprising a plurality of spacecraft) (appr. 1,600kg) to a sun synch. orbit (SSO) or similar orbit.

The active debris removal according to the present invention can handle target objects 60 of any size and orbit using a plurality of spacecraft 1 of the same type without the need for developing custom spacecraft. Heavier objects or objects requiring a large velocity change may use cascaded space attack packs (each comprising a plurality of spacecraft 1), in scenarios referred to as "Sequential Double Pack Attack", "Sequential Triple Pack Attack" or "Sequential Quad Pack Attack" and so forth. Subsequent attack formations may use target object data acquired by preceding packs for speedy completion.

This strategy makes economic sense as the spacecraft 1 used for realizing the present invention can be mass produced. Likewise, very light or small debris objects may be de-orbited by less than a full spacecraft complement. In a scenario, three spacecraft 1 form an equilateral triangle. Two or only one spacecraft 1 may also be considered for small and less critical objects 60, although it should be noted that any formation comprising less than three spacecraft 1 suffers from poor launcher usage. A single spacecraft 1 may ride as secondary payload, or an entire pack comprising four spacecraft 1 may be launched to collect and de-orbit four smaller objects 60.

In April 2012, ESA lost contact with the heavy Earth observation satellite Envisat. It is now adrift and poses a serious risk for other satellites. Should it disintegrate in a collision event, a large debris cloud would render classic Earth observation orbits practically unusable for hundreds of years to come. The need to remove Envisat has therefore been identified by ESA as one of the top priority debris removal missions. It is therefore interesting to investigate how a mission according to the method of the present invention could be launched to dispose of Envisat in the Earth's atmosphere.

Envisat has a mass of approximately 8 metric tonnes, and is adrift in an almost circular polar orbit above 800km altitude. It is entirely unresponsive, but known to be tumbling. For the purpose of this analysis, we assume that permanent disposal may be achieved by manoeuvring Envisat onto an elliptical disposal orbit with a pericentre altitude of 150km. A single, impulsive and ideal de-orbit burn would require approximately 520kg of storable bipropellant (i.e. Hydrazine-Nitrogentetroxide with a pessimistic effective ISP (initial specific impulse) of 300s). This is more than Envisat initially carried. A less efficient, pulsed thruster (around 230s) would require around 711kg of propellant assuming the ideal case.

Because a pack of spacecraft 1 used for the method according to the present invention can only pulse fire a thruster 13 when the thruster 13 is aligned right, in addition to any realistic de-orbit manoeuvre having a finite burn time, the de-orbit manoeuvres would not be ideal. It is further assumed that some spacecraft 1 are in more favourable locations than others, depleting their tanks 6 sooner. We assume for this purpose that the entire manoeuvre is only 50% efficient as compared to the ideal de-orbit case, so that a minimum of 1,422kg of propellant must be available to the pack to handle Envisat. Further, each spacecraft 1 needs, in addition to this, approximately 30kg of propellant to reach and maintain the attack formation, after launch onto a 150x800km transfer orbit.

A standard pack with four satellites 1 would have approximately 1,080kg of propellant at its disposal. A sequential double pack attack, in turn, would provide 2,160kg of propellant. With eight spacecraft 1 attached, the de-orbit mass increases by 800kg, and the ideal de-orbit propellant mass to 745kg, hence 1,490kg assuming 50% efficiency. The de-orbit manoeuvre sequence could therefore be even less than 50% efficient. An active debris removal mission with eight satellites is therefore able to safely dispose of Envisat.

This would require launching 3.2 metric tons to an 800x150km polar orbit. If two Indian PSLV launches are chosen for a total of 30 Million EUR and a single pack with four satellites 1 would cost 50 Million EUR, the removal of Envisat would cost ESA approximately 130 Million EUR, approximately 7% of its total mission cost of 2.3 Billion EUR and roughly half of its launch cost. If a double pack attack would cost 70 Million EUR rather than twice the single pack, the mission could be flown for 100 Million including launch.

A less costly, if less speedy, approach would foresee de-orbit to below 500km, something a single pack of four spacecraft 1 is able to comfortably achieve. While taking longer for Envisat's final orbit to decay, the mission could be flown for 65 Million EUR including launch, around 3% of the total mission cost.

If targeting is a requirement, the perigee may be lowered to less than 100km. This could be achieved during a convenient orbit, for example, targeting the Pacific Ocean. With a perigee above 200km, the rotation of Earth with respect to the orbital plain will position the satellite over any desired spot before the final re-entry. A controlled re-entry during a chosen orbit would add an extra 100kg of fuel, easily within the capability of a double-attack at no extra cost.

Leading experts today agree that, in order to prevent the Kessler-Syndrom from happening, five objects 60 must be removed from space each year. The need is especially pressing for highly populated orbits, such as polar orbits around 800km to 1000km typically used for Earth observation applications. Assuming the average object requires one full space attack complement (= one pack = appr. four satellites 1), a market for at least 20 spacecraft 1 per year exists. Although it is already stipulated by international space law that owners of space vehicles are responsible for their vehicle's safe disposal, and further that they remain liable for any damage incurred by that vehicle, it can be difficult to enforce the law should an owner fail to comply. Putting a price tag on the active removal of defunct space objects 60 automatically changes this, as it defines the financial implication of abandoning a spacecraft, regardless of whether it failed unexpectedly or whether the owner failed to provide measures of disposal. The court would therefore have a measure of the incurred damages which can be claimed. If a method existed to dispose of the abandoned vehicle, a court may well mandate its removal and order the owner to pay for the active debris removal mission. A court may further impose a freezing injunction on the owner's assets to cover potential damages should the owner be found in contempt of court.

As per public international law, removal of space objects from densely populated areas is mandated. Some countries have their own space law implementing similar regulation. However, the enforceability of said laws is often questionable. Even if the owner of the space object is fined, the object would remain in space. The active debris removal mission according to the method of the present invention would change that at a manageable cost. Perpetrators could be fined and the proceeds used towards object removal. A perpetrator may also be mandated to pay for his object's removal by the international court of justice. However, the mere fact that removal of major man-made objects 60 from space would have a price tag would allow policy makers, law-firms, courts and insurers to manage the risk.

Summing up, it is an important aspect of the present invention that the object 60 to be moved is not towed away into a desired position or orbit by a single or multiple spacecraft loosely connected to the object 60, e.g. by means of a flexible towing rope type or net type connection. Rather, the spacecraft 1 are rigidly attached to the object 60 in order to function as the object's engines. The rigid entity comprising the object 60 and the spacecraft 1 attached thereto is moved into the desired position in space by selectively activating the spacecraft's engines. Preferably, the entire active space debris removal mission is self-controlled by the spacecraft 1 and their computers 30, 31 without the need of a ground based control station for controlling the mission. However, for obvious reasons at least the definite decision to attack the object 60 by the spacecraft 1 should be reached by a human being and transmitted to the spacecraft 1 for realization of the attack by the pack of spacecraft 1.

## Claims

1. Method for modifying a position of uncontrolled objects (60) in space, **characterized by** the steps of:
- moving a plurality of individually controllable spacecraft (1) near an object (60) to be moved,
- attaching the spacecraft (1) to the object (60) from different sides, the object (60) and the spacecraft (1) attached thereto thereby forming a single rigidly coupled entity (1, 60),
- controlling the position of the entity by controlling the entity's individual spacecraft (1), and
- moving the entity (1, 60) to a desired position in space by controlling its position.

2. Method according to claim 1, wherein the spacecraft (1) each comprise a harpoon-like anchoring means (12) and each of the spacecraft (1) is attached to the object (60) by shooting the harpoon-like anchoring means (12) at the object (60), whereby the harpoon-like anchoring means (12) are automatically coupled to the object's surface (61).

3. Method according to claim 1, wherein the spacecraft (1) each comprises at least one claw fastener (22) which is extended from the spacecraft (1) and coupled to the object's surface (61), thereby fixedly attaching the spacecraft (1) to the object (60).

4. Method according to claims 2 and 3, **characterized in that** first the harpoon-like anchoring means (12) are shot at the object (60), whereby the harpoon-like anchoring means (12) are automatically coupled to the object's surface (61), and then the claw fasteners (22) are extended (22') from the spacecraft (1) and coupled to the object's surface (61), thereby pulling the object (60) towards the claw fasteners (22) by means of the harpoon-like anchoring means (12).

5. Method according to claim 3 or 4, wherein each spacecraft (1) uses three claw fasteners (22) for coupling the spacecraft (1) to the object's surface (61).

6. Method according to one of the claims 1 to 5, wherein at least four spacecraft (1) are used for moving an object (60) in space, thereby enabling any desired movement of the entity (1, 60) within the three-dimensional space by controlling the individual spacecraft (1).

7. Method according to claim 6, wherein the spacecraft (1) are located at certain attachment-points on different sides of the object (60), the attachment-points preferably constituting a tetrahedron, wherein each attachment-point comprises one or more spacecraft (1).

8. Method according to one of the claims 1 to 7, wherein each spacecraft (1) has a programmed on-board computer (30, 31) and a communication device (33) for communicating with the other spacecraft (1) attached to the object (60), wherein an entire mission of moving an object's position in space starting from moving the spacecraft (1) near the object (60) to be moved and ending with moving the entity (1, 60) to the desired position in space is self-controlled by the spacecraft (1) and their computers (30, 31), respectively, thereby possibly exchanging data between the computers (30, 31) of the spacecraft (1) attached to the object (60).

9. Method according to claim 8, wherein the computer (30, 31) of one of the spacecraft (1) attached to the object (60) assumes the role of a master-computer and the computers (30, 31) of the other spacecraft (1) are slave-computers.

10. Method according to one of the claims 1 to 9, wherein standard-spacecraft (1) are used for a mission of moving an object's position in space, wherein the hardware is identical for all spacecraft (1) used for the mission and only the spacecrafts' computers (30, 31) are programmed with individual software for the individual mission.

11. Method according to one of the claims 1 to 10, wherein the desired position where the object (60) is moved to is an outer orbit in deep space beyond the orbit used for commercial satellites and space stations or a position for atmospheric re-entry of the object.

12. Method according to one of the claims 1 to 11, wherein after the entity (1, 60) has reached its desired position at least some of the spacecraft (1) attached to the object (60) are separated from the object (60) at least partially, packed in an entry capsule and returned to earth allowing reuse or at least recycling of at least part of the spacecraft (1) after the mission.

13. Method according to one of the claims 1 to 12, wherein after the entity (1, 60) has reached its desired position at least one of the spacecraft (1) attached to the object (60) remains attached to the object (60) and continues to transmit a beacon signal or a ranging transponder signal for tracking purposes.

14. Spacecraft (1), **characterized in that** the spacecraft (1) comprises means for
- moving individually near an uncontrolled object (60) in space,
- attaching itself to the object (60) thereby forming a single rigidly coupled entity (1, 60),
- controlling the position of the entity by controlling the entity's individual spacecraft (1) and
- moving the entity (1, 60) to a desired position in space by controlling its position.

15. Spacecraft (1) according to claim 14, wherein it comprises harpoon-like anchoring means (12) and/or at least one claw fastener (22) for attaching itself to the object (60).
